# FASCICULE DE BREVET EUROPEEN

(11) **EP 4 222 841 B1**
(45) Date de publication et mention de la délivrance du brevet: **05.08.2026**
(21) Numéro de dépôt: 21798081.2
(22) Date de dépôt: 28.09.2021
(51) Int. Cl.: H02K 3/22, H02K 9/20, H02K 15/0407, C25D 7/06, H02K 3/50, F28D 20/00, C25D 5/10, C25D 5/56, C25D 3/38

(54) **CONDUCTEUR ÉLECTRIQUE À REFROIDISSEMENT PAR MATÉRIAU À CHANGEMENT DE PHASE ET SON PROCÉDÉ DE FABRICATION**
ELEKTRISCHER LEITER MIT PHASENWECHSELMATERIALKÜHLUNG UND VERFAHREN ZUR HERSTELLUNG DAVON
ELECTRIC CONDUCTOR WITH PHASE CHANGE MATERIAL COOLING AND MANUFACTURING METHOD THEREFOR

(30) Priorité: 30.09.2020 FR 2009950
(43) Date de publication de la demande: 09.08.2023
(73) Titulaire: SAFRAN, 75015 Paris (FR)
(72) Inventeur: SALLOT, Pierre Jean, 77550 Moissy-Cramayel (FR); AYAT, Sabrina Siham, 77550 Moissy-Cramayel (FR); FEDI, Baptiste Joël Christian, 77550 Moissy-Cramayel (FR)
(74) Mandataire: Cabinet Camus Lebkiri
(86) Numéro de dépôt international: PCT/FR2021/051672
(87) Numéro de publication internationale: WO 2022/069829

(56) Documents cités:
- EP-A1- 2 840 682
- WO-A1-2014/100096
- CN-A- 107 025 992
- FR-A1- 3 066 053
- US-A1- 2018 143 673
- US-A1- 2018 375 402

## Description

### DOMAINE TECHNIQUE DE L'INVENTION

Le domaine technique de l'invention est celui des conducteurs électriques pour une machine électrique à refroidissement par matériau à changement de phase notamment d'un démarreur-générateur d'une turbomachine ou d'un transformateur.

La présente invention concerne les conducteurs électriques des machines électriques installées sur les moteurs d'aéronef en particulier ceux d'un hélicoptère. Elle concerne particulièrement les machines électriques installées sur les moteurs d'hélicoptères en particulier réalisant la fonction de génération d'énergie électrique, et /ou de motorisation électrique de certains organes mécaniques. Ces machines électriques peuvent être des générateurs-démarreurs, des démarreurs, des alternateurs ou des pompes électriques qui sont des machines à courant continu ou à courant alternatif.

### ARRIERE-PLAN TECHNOLOGIQUE DE L'INVENTION

Un moteur d'un aéronef comprend des machines électriques comprenant un rotor (partie tournante) et un stator (partie fixe), le stator peut comprendre un circuit magnétique et un circuit électrique constitué par un ensemble de bobinages composés de fils conducteurs. D'autres type de stators de machines dites machine 'air-cored' a un circuit magnétique constitué d'air et du circuit électrique.

De manière connue, de telles machines électriques présentent des phases transitoires de fonctionnement rencontrées principalement lors des séquences de démarrage ou d'accélération du moteur de l'aéronef ou de certains équipements que comprend le moteur de l'aéronef.

Les documents FR3019218 et FR3019219 décrivent chacun un hélicoptère comprenant au moins un turbomoteur hybride apte à fonctionner dans au moins un régime de veille au cours d'un vol stabilisé de l'hélicoptère, les autres turbomoteurs fonctionnant seuls au cours de ce vol stabilisé. L'hélicoptère comprend en outre un pack électrotechnique de redémarrage rapide dudit turbomoteur hybride pour le sortir dudit régime de veille et atteindre un régime, dit régime nominal, dans lequel il fournit une puissance mécanique à une boite de transmission de puissance. Ces redémarrages sont un exemple de phases transitoires nécessitant un fort appel de courant.

Au cours de ces phases transitoires, par exemple le redémarrage rapide, la machine électrique est ainsi fortement sollicitée, et donc dissipe une quantité de chaleur qui peut s'avérer dommageable pour elle- même, chaleur principalement dissipée dans les circuits électrique et/ou les circuits magnétiques si la machine en comprend et/ou sur les aimants permanents si la machine en comprend.

En outre l'augmentation de la température diminue le rendement de la machine électrique dû fait que celle-ci augmente sa résistance électrique.

De manière connue, pour obtenir la bonne puissance, favoriser la dissipation de la chaleur et ainsi garantir l'intégrité de la machine électrique, on surdimensionne les éléments, en particulier les conducteurs électriques pour diminuer leur résistance électrique, qui la composent ce qui pénalise sa masse et son encombrement.

En effet, la structure et le dimensionnement d'une machine électrique sont guidés par sa tenue en thermique et cela est principalement fonction de l'amplitude des courants électriques qu'elle supporte au sein de ces bobinages conducteurs (par exemple, une machine électrique fonctionnant sous une tension réseau basse tension par exemple de 28Vdc, sous une puissance de plusieurs kW ou kVA donnera des courants électriques d'intensité élevés pouvant atteindre plusieurs centaines d'ampères).

Afin d'optimiser la dissipation thermique de la machine électrique, plusieurs solutions sont d'ores et déjà connues et exploitées.

Une première solution utilise la convection naturelle avec refroidissement par dissipateur à ailettes en périphérie de la machine électrique pour avoir une surface d'échange importante avec le milieu environnant. Toutefois, cette solution est encombrante et massive et nécessite souvent la présence d'un flux d'air en périphérie de la machine.

Une seconde solution utilise la convection forcée par l'ajout d'un ventilateur connecté à l'arbre rotor de la machine électrique, dont le flux d'air ainsi produit échangera avec les parties externes et/ou internes de celle-ci. Toutefois, cette solution est encombrante et peut générer des sources de pannes supplémentaires.

Une troisième solution utilise un refroidissement forcé en injectant un liquide circulant dans des canaux dédiés à l'intérieur de la machine électrique ou en périphérie (eau, huile, carburant, etc.) et nécessite le plus souvent la présence d'un échangeur supplémentaire pour assurer le refroidissement de ce liquide.

Toutefois, cette solution est aussi encombrante, massive et intrusive, et peut nécessiter des intervalles de maintenance assez courts (i.e. gestion des étanchéités).

Cela explique que des recherches actives soient menées afin de positionner au cœur des bobines des dispositifs capables d'assurer un refroidissement direct, continu ou différé.

Une quatrième solution utilise un refroidissement par module thermoélectrique (effet Peltier). Toutefois, le refroidissement est réalisé uniquement sur des zones localisées et nécessite également une alimentation stabilisée permettant l'alimentation thermoélectrique.

La plupart des solutions décrites précédemment, sont efficaces pour le refroidissement de la machine en continu mais ne permettent pas de gérer des transitoires à fort courant générant des pics de chaleur. En effet, pour des solutions de refroidissement telles que le refroidissement forcé en injectant un liquide, la chaleur produite dans les bobines doit traverser leurs vernis, le papier d'encoche, la culasse magnétique avant de rejoindre le carter où la chaleur sera évacuée par le liquide de refroidissement situé dans les canaux. Ceci induit un temps de réponse incompatible avec des régimes transitoires contraignant thermiquement.

Ainsi, dans une application aéronautique, c'est-à-dire dans le cadre d'un système embarqué exigeant de fortes contraintes en termes de compacité, masse et fiabilité, les solutions existantes ne sont pas satisfaisantes.

Il est connu du document FR3012698 une machine électrique comprenant au moins un dissipateur de chaleur comprenant un matériau à changement de phase de manière à dissiper la chaleur au cours des phases transitoires de ladite machine électrique, ledit dissipateur étant disposé au plus près des sources de chaleur impliquées au cours desdites phases transitoires de ladite machine électrique.

Il est connu en outre du document FR3066053 une machine électrique comprenant un bobinage d'éléments conducteurs et au moins un dissipateur de chaleur disposé à l'intérieur d'un élément conducteur, le dissipateur de chaleur comprenant un matériau à changement de phase. Notamment il est décrit que le bobinage est un ensemble de fils cylindriques ou en forme de barre creux. Le dissipateur de chaleur comprend, outre le matériau à changement de phase, au moins un élément qui est conducteur électrique de manière à ne pas perturber la circulation des lignes de champ magnétiques dans ladite machine.

Le matériau à changement de phase est capable de changer d'état physique entre l'état solide et l'état liquide dans une plage de température donnée.

Le matériau à changement de phase est contenu dans une enveloppe métallique étanche, l'enveloppe étant conductrice électriquement ou non. L'enveloppe métallique étanche est thermiquement conductrice.

Ce matériau de changement de phase permet d'améliorer le refroidissement de l'élément conducteur. En effet, l'utilisation de matériaux à changement de phase permet un refroidissement au plus près des éléments chauffants. En atteignant sa température de fusion donc en passant de l'état solide à l'état liquide, le matériau à changement de phase absorbe une quantité de chaleur. En conséquence, un transfert thermique va s'opérer entre les éléments chauffants et le matériau à changement de phase.

Cependant la fabrication de tels éléments conducteurs est compliquée à réaliser. Il nécessite d'une part de réaliser un conducteur creux et d'autre part de disposer le dissipateur de chaleur comprenant le matériau à changement de phase à l'intérieur du conducteur. En effet, la fabrication de conducteurs creux est aujourd'hui connue et obtenue par des procédés de tréfilage / extrusion. Des bobines de plusieurs kilomètres de long sont ainsi stockables et sont utilisées actuellement pour des machines à très haute tension. Néanmoins, il faut par la suite les remplir du matériau à changement de phase pour assurer la fonction de refroidissement.

En outre, le rayon de courbure minimal du conducteur ainsi généré peut être augmenté, ce qui peut augmenter la taille des têtes de bobines augmentant la masse de la machine électrique.

Un autre exemple de fabrication du bobinage est indiqué dans le document FR3066053 qui précise que le bobinage barre est monobloc ou composé d'un ensemble de barres unitaires et est obtenu au moyen d'un procédé de fabrication additive (i.e. type SLM, en anglais, « Sélective Laser Melting » ou autres ...) qui permet de réaliser des formes complexes à l'intérieur du bobinage, favorisant l'optimisation des transferts thermiques (i.e., surface d'échange augmentée entre le matériau à changement de phase et le conducteur).

Le remplissage se fait typiquement en portant le matériau à changement de phase en phase liquide puis en l'injectant dans le conducteur creux. Ce remplissage peut être réalisé sous vide pour éviter la formation de bulles d'air.

La pression nécessaire pour faire pénétrer le matériau à changement de phase sur des distances élevées est trop importante pour être facilement réalisable industriellement, notamment sur des sections inférieures à 400 mm². En effet, plus la section du conducteur est petite, plus la chute de pression doit être grande pour faire pénétrer le matériau à changement de phase dans le conducteur, augmentant les risques de bulles d'air dans le conducteur creux.

D'autre part, cette technologie de conducteur creux ne permet pas à ce jour une évolution linéique de la géométrie de la section.

Il existe donc un besoin de simplifier la fabrication d'une telle machine électrique comprenant les éléments conducteurs avec un dissipateur à l'intérieur de ceux-ci et notamment pour des éléments conducteurs ayant une section inférieure à 400 mm².

### RESUME DE L'INVENTION

L'invention offre une solution aux problèmes évoqués précédemment, en proposant un procédé de fabrication simple pour produire de façon industrielle un conducteur de bobinage comprenant l'élément conducteur et le dissipateur thermique comprenant le matériau à changement de phase à l'intérieur de celui-ci.

L'invention concerne un procédé de fabrication d'un conducteur d'un enroulement d'un bobinage, le procédé étant défini par la revendication 1.

Grâce à l'invention, il est plus simple de fabriquer un conducteur comprenant un élément conducteur et un dissipateur thermique comprenant un matériau à changement de phase à l'intérieur de l'élément conducteur pouvant avoir une section linéique variable. En effet, le fait de fabriquer l'élément conducteur sur le dissipateur thermique et non d'insérer le dissipateur thermique dans l'élément conducteur simplifie fortement le procédé de fabrication et permet en outre d'avoir un élément conducteur avec une qualité de fabrication plus robuste que par insertion du matériau à changement de phase dans un conducteur creux, mais également d'épouser une complexité géométrique non atteignable avec des procédés conventionnels. En effet, le matériau à changement de phase fait partie de la préforme, c'est-à-dire que la préforme est formé à partir du matériau à changement ce qui permet de ne plus remplir une préforme creuse d'un fil déjà fabriqué par un matériau à changement de phase comme dans l'art antérieur.

On entend par « matériau à changement de phase » un matériau capable de changer d'état physique dans une plage de température donnée et qui va absorber une grande quantité d'énergie calorifique venant de son environnement proche pour passer de l'état solide à liquide et qui restitue une partie de l'énergie calorifique quand le matériau se refroidit en passant de l'état liquide à l'état solide.

Outre les caractéristiques qui viennent d'être évoquées dans le paragraphe précédent, le procédé de fabrication d'un conducteur d'un enroulement d'un bobinage selon un aspect de l'invention peut présenter une ou plusieurs caractéristiques complémentaires parmi les suivantes, considérées individuellement ou selon toutes les combinaisons techniquement possibles :

Selon une mise en œuvre du procédé le matériau conducteur électriquement est du cuivre.

Selon une mise en œuvre du procédé le matériau conducteur électriquement est du nickel.

Selon une mise en œuvre du procédé le matériau conducteur électriquement est de l'or.

Selon une mise en œuvre du procédé, l'étape de fabrication de l'élément conducteur par dépôt de couche de matériau conducteur électriquement sur la préforme dissipateur thermique est réalisée par électroformage.

Selon une mise en œuvre du procédé, la solution est une solution électrolytique du matériau conducteur électriquement.

Selon un exemple la solution électrolytique du matériau conducteur électriquement a une température inférieure à la température de changement de phase du matériau à changement de phase. Cela permet de ne pas déformer la préforme en matériau à changement de phase lors de la fabrication de conducteur.

Selon une mise en œuvre du procédé, l'étape de fabrication d'une préforme de dissipateur thermique comprenant un matériau à changement de phase comprend une sous-étape d'usinage du matériau à changement de phase.

Selon une autre mise en œuvre que la précédente, l'étape de fabrication d'une préforme de dissipateur thermique comprenant un matériau à changement de phase comprend une sous-étape d'injection plastique ou par moulage ou extrusion du matériau à changement de phase.

Selon une variante des deux autres mises en œuvre précédentes, l'étape de fabrication d'une préforme de dissipateur thermique comprenant un matériau à changement de phase comprend une sous-étape de fabrication additive du matériau à changement de phase.

Selon un exemple d'une de ces mises en œuvre du procédé dans lequel l'étape de fabrication d'une préforme de dissipateur thermique comprend une sous-étape de fabrication additive ou par moulage ou usinage pour que la préforme de dissipateur thermique ait une section irrégulière. Cela peut permettre d'avoir un bobinage ayant moins de matière dans le chignon ou tête de bobine d'un stator. La contrainte des conducteurs classiques en termes de rayon de courbure a pour conséquence l'augmentation de la taille des têtes de bobine, donc du poids de la machine. Les têtes de bobine ne participent pas à la création de couple dans la machine, le fait de pouvoir avoir une préformer de dissipateur ayant une section irrégulière peut donc avoir une forme pour limiter la taille de cette région. Selon un exemple, la section du conducteur peut varier selon la longueur du conducteur. Par exemple le conducteur a des portions pour les têtes de bobine ayant des sections de formes différentes que celles des portions pour les parties actives mais sans réduire la surface de section des conducteurs au niveau des têtes de bobines pour ne pas augmenter des pertes Joules.

Selon un exemple, l'étape de fabrication de la préforme de dissipateur thermique forme une pluralité de portion ayant une section selon une première forme et une pluralité de deuxième portion selon une deuxième forme différente de la première forme et en ce que l'étape de dépôt du matériau conducteur sur la préforme forme un conducteur ayant des premières portions ayant chacune une section de forme différente d'une forme de section d'une pluralité de deuxièmes portions du conducteur. Selon un exemple la première section a une forme destinée à épouser la forme du fond d'une encoche d'un stator ou rotor (par exemple rectangulaire) et la deuxième section a une forme pour épouser la forme de l'encoche entre la première section et l'entre-dents (l'orifice d'entrée) de l'encoche. Cela permet d'augmenter le taux de remplissage du conducteur dans l'encoche. Par exemple les premières sections ont une forme rectangulaire ayant une base plus large que celle des deuxièmes sections quand l'encoche est ouverte vers l'axe du stator ou rotor.

Selon une mise en œuvre, la préforme de dissipateur thermique comprend uniquement le matériau à changement de phase ou le matériau de changement de phase métallisé par une opération de métallisation chimique.

Selon une mise en œuvre du procédé, le procédé comprend en outre une étape d'ajustement du volume de matériau à changement de phase comprenant :
- une sous-étape de changement de phase de la phase solide à la phase liquide du matériau à changement de phase et
- une sous-étape d'évacuation du volume du matériau à changement de phase par au moins une extrémité engendrée par les dilatations thermiques du matériau à changement de phase.

Ainsi cela permet d'éviter une surpression dans l'élément conducteur pouvant entrainer des extensions du conducteur.

Selon un exemple de cette mise en œuvre du procédé, le changement de phase est réalisé par un cycle thermique permettant en outre de stabiliser les propriétés thermiques du matériau à changement de phase.

Selon une mise en œuvre du procédé, le procédé comprend en outre une étape d'enfermement du matériau à changement phase.

Selon un exemple de cette mise en œuvre, l'étape d'enfermement du matériau à changement phase comprend une étape de dépôt par électrophorèse d'une couche d'isolant électrique de type AIN, Nanotubes de Bore, BN, Alumine sur la couche de matériau conducteur déposée sur la préforme et aux extrémités pour fermer le conducteur.

Selon un exemple de cette mise en œuvre, l'étape d'enfermement du matériau à changement phase comprend une sous-étape d'insertion de bouchon aux deux extrémités du conducteur. Cela permet d'éviter que le matériau à changement de phase ne puisse sortir de l'élément de conducteur.

Selon une particularité de cet exemple de cette mise en œuvre du procédé, chaque bouchon comprend la connectique nécessaire à l'alimentation de la bobine du bobinage. Cela permet d'éviter d'ajouter en outre une connectique au bouchon.

Selon une particularité de cet exemple de cette mise en œuvre, la sous-étape d'insertion de bouchon est réalisée sur une préforme de conducteur comprenant la préforme de dissipateur thermique et une couche de cuivre sur la préforme de dissipateur thermique formant une partie de l'élément de conducteur pendant l'étape de dépôt de couche d'élément conducteur.

Selon un exemple de cette particularité, l'étape d'enfermement du matériau à changement de phase du dissipateur thermique comprend :
- une sous-étape d'insertion de bouchon sur une préforme de conducteur comprenant la préforme de dissipateur thermique et une couche de cuivre sur la préforme de dissipateur thermique formant une partie de l'élément de conducteur pendant l'étape de dépôt de couche d'élément conducteur.

Par exemple, l'étape de dépôt comprend :
- une sous-étape de retrait d'une préforme de conducteur de la solution électrolytique du matériau conducteur électriquement, la préforme de conducteur comprenant la préforme de dissipateur thermique et une couche du matériau conducteur sur la préforme de dissipateur thermique formant une partie de l'élément conducteur,
- une sous-étape d'insertion d'une préforme de conducteur avec les bouchons dans la solution électrolytique du matériau conducteur électriquement,
- une deuxième sous-étape d'électrodéposition pour le dépôt du matériau conducteur électriquement sur le préformage de câble conducteur et les bouchons.
- et en ce que l'étape d'enfermement du matériau à changement de phase du dissipateur thermique comprend la sous-étape d'insertion de bouchon sur la préforme de conducteur entre la sous-étape de retrait et la deuxième sous-étape d'insertion.

Cela permet d'avoir un élément conducteur formé en outre sur le bouchon permettant d'avoir une meilleure conductivité et une meilleure étanchéité.

Selon une combinaison de cet exemple de cette mise en œuvre et de la mise en œuvre du procédé comprenant en outre l'étape d'ajustement du volume de matériau à changement de phase décrit ci-dessus, l'étape d'ajustement du volume de matériau à changement de phase est réalisée avant la sous-étape d'insertion de bouchon sur la préforme de conducteur.

Par exemple, l'étape d'ajustement du volume de matériau à changement de phase est réalisée entre la sous-étape de retrait et la sous-étape d'insertion.

Selon une variante de cet exemple de cette mise en œuvre, l'étape d'enfermement du matériau à changement phase est réalisée par l'ajout de l'élément conducteur sur la préforme de dissipateur thermique.

Selon une mise en œuvre du procédé, la préforme de dissipateur thermique est un câble.

Selon un exemple de cette mise en œuvre du procédé, le câble est à section cylindrique.

Selon un autre exemple de cette mise en œuvre du procédé, le câble a une section rectangulaire ou carrée. Cela permet d'améliorer le taux de remplissage de conducteur de la bobine, notamment dans le cas d'une encoche d'un stator d'une machine électrique.

Selon une mise en œuvre du procédé, l'étape de fabrication d'une préforme de dissipateur thermique comprend une première sous-étape d'une fabrication d'une préforme de matériau à changement de phase et une deuxième sous-étape de métallisation par voie chimique par exemple dépôt chimique de cuivre ou d'argent sur la préforme de matériau à changement de phase.

Selon une combinaison de cette mise en œuvre et de la mise en œuvre du procédé, le procédé comprend en outre l'étape d'ajustement du volume de matériau à changement de phase décrit ci-dessus.

Selon une mise en œuvre du procédé, le matériau à changement de phase est à phase solide à température ambiante.

Selon une mise en œuvre du procédé, le matériau à changement de phase a une température de fusion supérieure à cent degrés Celsius. Cela permet de pouvoir utiliser comme solution électrolytique du matériau conducteur, de l'eau et de réaliser l'électrodéposition sans changer de phase le matériau à changement de phase d'une phase solide à une phase liquide tout en pouvant aller jusqu'à l'ébullition de l'eau.

Selon une mise en œuvre du procédé, le matériau à changement de phase a une chaleur latente de fusion supérieure à cent vingt kilojoules par kilogramme.

Selon une mise en œuvre du procédé, le matériau à changement de phase est choisi parmi un acide gras (par exemple, le fumarate de fer) ou un sel hydraté (par exemple, le MgCl26H2O) ou encore un matériau organique (par exemple Benzamide, stibene, acide benzoïque, xylène de méthylène, catéchol, quinone, acétanilide, anhydride sulfureux, etc (hors paraffine)). Ces matériaux à changement de phase ont l'avantage de pouvoir avoir les caractéristiques des trois mises en œuvre précédentes.

Selon une variante de la mise en œuvre du procédé précédente, le matériau à changement de phase est choisi parmi un eutectique organique et inorganique (par exemple, le LiNO3 + NH4NO3 + NH4Cl) ou matériaux métalliques (par exemple, le Bi-Pb eutectique). Ces matériaux permettent d'avoir l'avantage de pouvoir avoir au moins une caractéristique parmi les trois modes de mise en œuvre avant la mise en œuvre précédente.

Selon une mise en œuvre, le matériau à changement de phase est à changement de phase endothermique.

Selon une mise en œuvre, le procédé comprend une étape d'isolation, comprenant une sous-étape de dépôt par électrophorèse d'une couche isolante de type AIN, Nanotubes de Bore, BN, Alumine sur la couche de matériau conducteur déposée sur la préforme. Cela permet de réaliser une isolation de spires. L'étape d'isolation peut être effectué après la fermeture du conducteur ou peut être effectuée sur l'ouverture réalisant la fermeture du conducteur.

Un autre aspect de l'invention concerne un bobinage comprenant au moins un enroulement comprenant un conducteur fabriqué selon le procédé de l'invention décrit précédemment avec ou sans une ou les différentes caractéristiques des mises en œuvre décrites précédemment. Le bobinage peut avoir plusieurs enroulements, par exemple trois, dans le cas d'un triphasé ou encore six dans le cas d'un double triphasé et chaque enroulement peut avoir plusieurs conducteurs.

Selon un exemple, le conducteur fabriqué comprend une couche isolante qui peut être fait par dépôt électrophorétique d'une céramique isolante électrique et conductrice thermique (AIN, BN, nanotubes de bore, alumine, ...).

Un autre aspect de l'invention concerne une machine électrique comprenant le bobinage selon l'aspect de l'invention décrit précédemment.

Selon un exemple l'isolation par couche isolante d'une étape d'isolation du conducteur est réalisée avant l'insertion du bobinage dans le moteur.

Un autre aspect de l'invention concerne une turbomachine hybride comprenant la machine électrique selon l'aspect de l'invention décrit précédemment.

Un autre aspect de l'invention concerne un hélicoptère comprenant une turbomachine hybride comprenant une machine électrique selon l'aspect de l'invention décrit précédemment.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] représente un schéma de principe d'un grafcet d'un procédé de fabrication d'un conducteur selon une première mise en œuvre.
[Fig. 2] représente un schéma de principe d'un grafcet d'un procédé de fabrication d'un conducteur selon une deuxième mise en œuvre.
[Fig. 3] représente un schéma de principe d'un grafcet d'un procédé de fabrication d'un conducteur selon une troisième mise en œuvre.
[Fig. 4] représente un schéma de principe d'un grafcet d'un procédé de fabrication d'un conducteur selon une quatrième mise en œuvre.

### DESCRIPTION DETAILLEE

Les figures sont présentées à titre indicatif et nullement limitatif de l'invention.

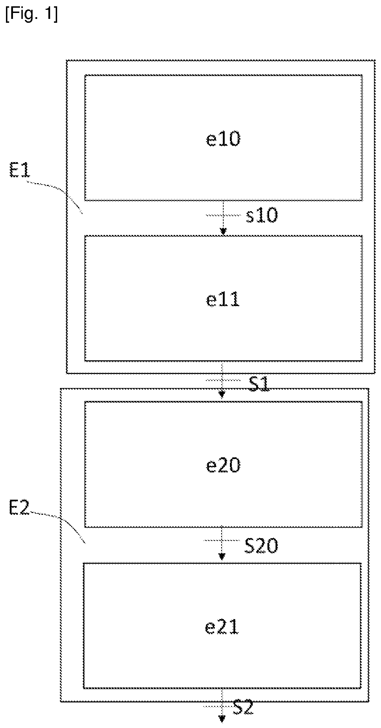

La figure 1 représente un schéma de principe d'un grafcet d'une première mise en œuvre d'un procédé de fabrication d'un conducteur nu S2 d'un enroulement d'un bobinage comprenant un élément conducteur et un dissipateur thermique comprenant le matériau à changement de phase à l'intérieur de l'élément conducteur.

Dans la demande, on entend par « élément conducteur » la partie conductrice électrique principale du conducteur.

Dans la demande, on entend par « dissipateur thermique » la partie du conducteur permettant de refroidir l'élément conducteur.

Dans la demande, on entend par « matériau à changement de phase » un matériau capable de changer d'état physique dans une plage de température donnée et qui va absorber une grande quantité d'énergie calorifique venant de son environnement proche pour passer de l'état solide à liquide et qui restitue une partie de l'énergie calorifique quand le matériau se refroidit en passant de l'état liquide à l'état solide.

Le procédé comprend une étape de fabrication E1 d'une préforme de dissipateur thermique S1 comprenant un matériau à changement de phase.

Le matériau à changement de phase conducteur peut être soit métallique conducteur électriquement, par exemple un alliage bismuth et Plomb eutectique soit non métallique conducteur, par exemple sous forme de sel tel que le fumarate de fer, ou il peut s'agir par exemple de sel hydraté par exemple nitrates ou des hydroxydes (LiNO3, NaNO3, Li2CO3 ...) préférablement avec du graphite.

Dans cette première mise en œuvre, le matériau à changement de phase conducteur est non conducteur et l'étape de fabrication E1 d'une préforme de dissipateur thermique S1 comprend, selon l'invention, une première sous-étape de fabrication e10 d'une préforme de matériau à changement de phase s10.

La première sous-étape de fabrication e10 de la préforme de matériau à changement de phase s10 peut être réalisée par un procédé additif ou moulage ou usinage. Selon un exemple de cette première mise en œuvre, la première sous-étape de fabrication e10 de la préforme de matériau à changement de phase s10 est agencée pour réaliser une préforme de matériau à changement de phase à section irrégulière.

Cela permet de réaliser la préforme de dissipateur thermique a une section irrégulière et donc un conducteur a section irrégulière. Cela peut permettre d'avoir un bobinage ayant moins de matière dans le chignon ou tête de bobine d'un stator. En effet, la contrainte des conducteurs classiques en termes de rayon de courbure a pour conséquence l'augmentation de la taille des têtes de bobine, donc du poids de la machine. Les têtes de bobine ne participent pas à la création de couple dans la machine, le fait de pouvoir avoir une préformer de dissipateur ayant une section irrégulière peut donc avoir une forme pour limiter la taille de cette région. Selon un exemple, la section du conducteur peut varier selon la longueur du conducteur. Par exemple le conducteur a des portions ayant des sections de formes différentes pour les têtes de bobine que ces des sections des portions pour les parties actives mais sans réduire la surface de section des conducteurs au niveau des têtes de bobines pour ne pas augmenter des pertes Joules.

L'étape de fabrication E1 d'une préforme de dissipateur thermique S1 comprend en outre une deuxième sous-étape de métallisation e11 par voie chimique, par exemple de dépôt chimique de cuivre ou d'argent, sur la préforme matériau à changement de phase s10 pour former la préforme de dissipateur thermique S1.

Le procédé comprend en outre une étape de dépôt E2 d'un élément conducteur par dépôt de couche de matériau conducteur électriquement sur la préforme dissipateur thermique. Le matériau conducteur électriquement est du cuivre dans cet exemple.

L'étape de dépôt E2 comprend une première sous-étape d'insertion e20 de la préforme de dissipateur thermique S1 dans une solution électrolytique du matériau conducteur électriquement S20' et une deuxième sous-étape d'électrodéposition e21 pour le dépôt du matériau conducteur électriquement sur la préforme dissipateur thermique. La solution électrolytique peut être une solution de sulfate de cuivre acide par exemple.

La sous-étape d'électrodéposition e21 peut être une étape d'électroformage.

Lorsque la sous-étape d'électrodéposition e21 a déposé assez de matériau conducteur sur la préforme dissipateur thermique, par exemple jusqu'à ce qu'à une section prédéterminée par exemple une section de l'ensemble conducteur égale à 200 mm², le conducteur nu S2 est formé et peut être retiré de la solution électrolytique du matériau conducteur électriquement S20.

Le procédé selon cet exemple de cette première mise en œuvre peut comprendre en outre une étape d'isolation comprenant l'ajout d'une résine isolante sur le conducteur nu S2 par exemple par le passage dans un bain du conducteur nu S2 dans un bain de résine isolant pour l'imprégner et isoler et former ainsi un conducteur isolant.

Par exemple l'étape d'isolation comprend une étape de dépôt par électrophorèse d'une couche isolante de type AIN, Nanotubes de Bore, BN, Alumine pour l'isolation de spires. La couche isolante peut être fait par dépôt électrophorétique d'une céramique isolante électrique et conductrice thermique (AIN, BN, nanotubes de bore, alumine, ...). Cette étape d'isolation est réalisée avant l'insertion du bobinage dans le moteur.

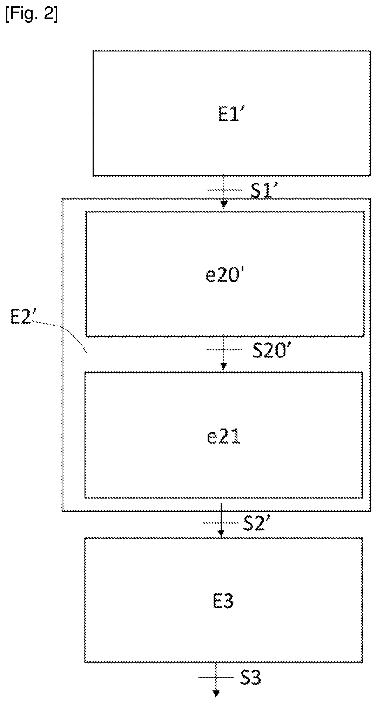

La figure 2 représente un schéma de principe d'un grafcet d'un procédé de fabrication d'un conducteur isolant S3 d'un enroulement d'un bobinage selon une deuxième mise en œuvre.

Ce procédé est identique au premier procédé de réalisation sauf en ce que le matériau de changement phase est métallique conducteur, par exemple un alliage bismuth et Plomb eutectique, et donc en ce que l'étape de fabrication E1' d'une préforme de dissipateur thermique S1 comprenant un matériau à changement de phase est différente en ce qu'elle ne comporte pas de sous-étape de métallisation e11 par voie chimique. Bien entendu, le procédé peut comporter cette étape de métallisation pour augmenter la conductivité.

Dans cette deuxième mise en œuvre, l'étape de fabrication E1' d'une préforme de dissipateur thermique S1' peut être réalisée par un procédé additif ou moulage ou usinage ou par extrusion. En l'occurrence, dans cet exemple, le conducteur S3 est un câble à section régulière par exemple de 300 mm² et l'étape de fabrication E1' d'une préforme de dissipateur thermique S1' est réalisée par extrusion de la matière à changement de phase métallique conductrice formant directement la préforme dissipateur thermique S1'.

L'étape étape de dépôt E2' d'un élément conducteur par dépôt de couche de matériau conducteur électriquement sur la préforme dissipateur thermique S1' peut être réalisé de manière identique à l'étape étape de dépôt E2 de la première mise en œuvre. Le conducteur nu S2' est formé et peut être retiré de la solution électrolytique du matériau conducteur électriquement S20 lorsque la section de l'ensemble conducteur égale à 300mm 2.

Le conducteur nu S2' peut en outre ensuite être imprégné d'une résine isolante. En l'occurrence dans cet exemple, le procédé de cette première mise en œuvre peut comprendre en outre une étape d'isolation E3 comprenant l'ajout d'une résine isolante sur le conducteur nu S2' par exemple par le passage dans un bain du conducteur nu S2' dans un bain de résine isolant pour l'imprégner et isoler et former ainsi un conducteur isolant S3.

Selon un exemple de la première, deuxième, mise en œuvre, le procédé comprend une étape d'enfermement de la matière à changement de phase comprenant une sous-étape d'insertion d'un bouchon à l'extrémité de la préforme comprenant une chambre d'expansion en vis-à-vis de la matière à changement de phase pour permettre à la matière de changement de phase de s'étendre dans cette chambre lors de son premier changement de phase de la phase solide à la phase liquide. L'étape d'enfermement peut être réalisée entre l'étape de fabrication E1, E1' de la préforme et l'étape de dépôt E2, E2', d'un élément conducteur ou après l'étape de dépôt E2, E2', d'un élément conducteur en coupant au moins une extrémité du conducteur nu ou encore pendant l'étape de dépôt E2, E2', E2" comme par exemple dans une quatrième mise en œuvre décrite dans la suite sans ou avec une étape d'ajustement décrit dans la suite.

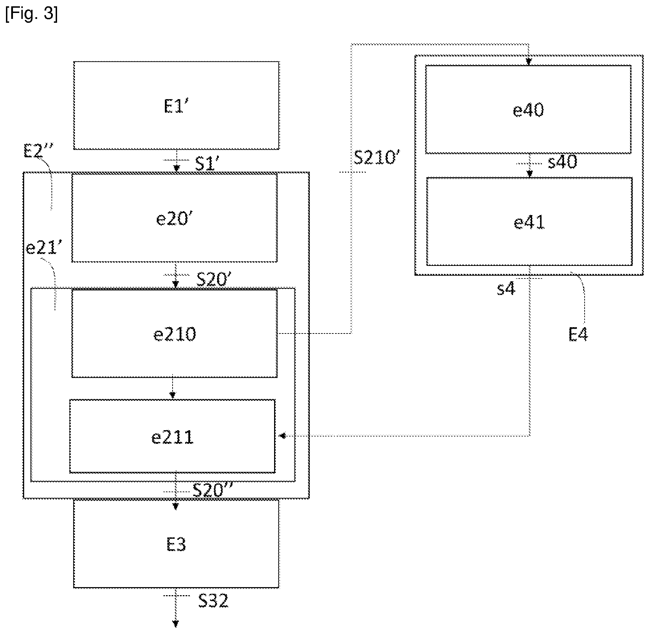

La figure 3 représente un schéma de principe d'un grafcet d'un procédé de fabrication d'un conducteur S32 d'un enroulement d'un bobinage selon un exemple d'une troisième mise en œuvre.

Ce procédé comprend une étape de fabrication E1' d'une préforme de dissipateur thermique S1' identique à celui de la deuxième mise en œuvre et comprend en outre de la sous-étape d'électrodéposition e210 de la préforme du dissipateur thermique, une deuxième sous-étape d'électrodéposition e211 d'une préforme de conducteur ajusté S4 et en outre une étape d'ajustement E4 d'un volume de matériau à changement de phase S4 de la préforme de conducteur ajusté S4 pendant la première sous-étape d'électrodéposition e210 par électrolyse.

Selon un autre exemple de cette troisième mise en œuvre, non représenté, l'étape de fabrication d'une préforme de dissipateur thermique est identique à celui de la première mise en œuvre.

L'étape de dépôt E2" d'un élément conducteur par dépôt de couche de matériau conducteur électriquement sur la préforme du dissipateur thermique S1' comprend, de façon identique à la deuxième mise en œuvre, la première sous-étape d'insertion e20' de la préforme de dissipateur thermique dans une solution électrolytique du matériau conducteur électriquement.

L'étape d'ajustement E4 du volume de matériau à changement de phase S4 comprend une sous-étape de changement de phase e40 de la phase solide à la phase liquide S40 du matériau à changement de phase et une sous-étape d'évacuation e41 du volume du matériau à changement de phase par au moins une extrémité engendrée par les dilatations thermiques du matériau à changement de phase jusqu'à ce que le volume du matériau à changement de phase atteigne un volume prédéterminé dans la préforme conducteur ajustée S4.

Dans cet exemple, pour réaliser l'étape d'ajustement E4, il est nécessaire qu'une préforme de conducteur S210' comprenant la préforme de dissipateur thermique S1' et une partie de l'élément conducteur entourant la préforme de dissipateur thermique S1', soient suffisamment recouverte du matériau conducteur par la sous-étape d'électrodéposition e21' pour être étanche afin de réaliser l'étape d'ajustement E4.

Dans cet exemple de cette troisième mise en œuvre, on réalise l'étape d'ajustement E4 pendant la sous-étape d'électrodéposition e21', par exemple en récupérant les extrémités de la préforme conducteur S210', en coupant au moins une des extrémités étanches pour ouvrir les extrémités de la préforme conducteur, et en montant la température de la solution jusqu'à la température de fusion du matériau à changement de phase pour réaliser l'étape de changement de phase s40 et ensuite l'étape d'évacuation e41 d'une partie du matériau de changement de phase jusqu'au volume prédéterminé.

Dans cet exemple, lorsque la préforme de conducteur ajusté S4, on réinsère les extrémités de la préforme de conducteur comprenant le volume de matériau à changement de phase prédéterminé S4 dans la solution électrolytique et en ce que la sous-étape d'électrodéposition e21' par électrolyse, comprend une deuxième étape d'électrodéposition par électrolyse e211' continuant l'ajout du conducteur de matériau sur la préforme de conducteur S4 jusqu'à avoir un conducteur nu S20" comprenant la section prédéterminé, par exemple 400 mm² et comprenant ainsi le volume prédéterminé de matériau à changement de phase.

Selon un autre exemple non représenté, on retire la préforme conducteur S210', on réalise l'étape d'ajustement E4 et on réintègre la préforme de conducteur avec le volume prédéterminé S4 dans la solution pour réaliser la dernière deuxième étape d'électrodéposition par électrolyse e211'. Cet exemple permet d'avoir un conducteur uniforme puisque l'on arrête l'électrolyse de la préforme conducteur S210' pendant l'étape d'ajustement E4 alors que dans l'exemple représenté, la partie de la préforme S210' immergée dans la solution continue à être électrolysée et donc avoir un ajout de matière conducteur.

Selon une variante non représentée, le procédé réalise l'étape d'ajustement E4 sur le conducteur nu, et comprend en outre une étape d'enfermement du matériau conducteur en insérant au moins un bouchon sur l'extrémité ouverte (par la coupure de l'extrémité de la préforme de conducteur S210'). Le bouchon peut être scellé par soudure ou brasure par exemple.

Le procédé peut comprendre une étape d'isolation E3 comme dans les précédents modes de réalisation en imprégnant le conducteur nu S20" dans un bain de résine isolant et ressortir ainsi un conducteur isolé S32.

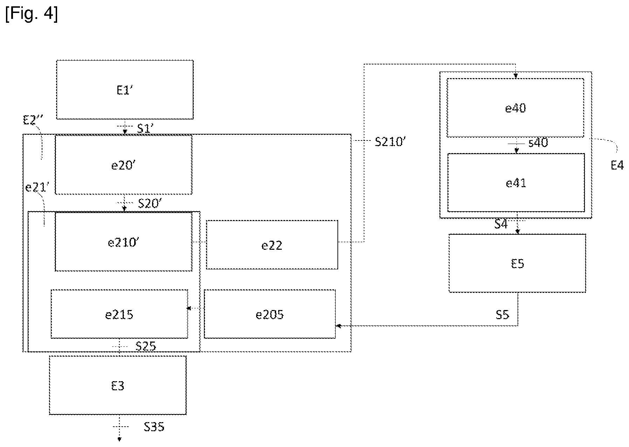

La figure 4 représente un schéma de principe d'un grafcet d'un procédé de fabrication d'un conducteur S35 d'un enroulement d'un bobinage selon un exemple d'une quatrième mise en œuvre.

Ce procédé comprend une étape de fabrication E1' d'une préforme de dissipateur thermique S1' identique à celui du procédé de la troisième mise en œuvre et une étape de dépôt E2‴ d'un élément conducteur par dépôt de couche de matériau conducteur électriquement sur la préforme dissipateur thermique S1' différente de cette troisième mise en œuvre en ce qu'elle comprend en outre une sous-étape de retrait e22 de la préforme de conducteur S210' de la solution électrolytique du matériau conducteur électriquement et d'une deuxième sous-étape d'insertion 205 d'un préforme de conducteur S5 avec bouchon dans la solution et en ce que le procédé comporte en outre une étape d'ajustement E4 du volume de matériau à changement de phase S4 et une étape d'enferment E5 de ce matériau à changement de phase réalisée entre la sous-étape de retrait e22 et la deuxième étape d'insertion e205.

Dans cette quatrième mise en œuvre, le procédé comprend donc après la sous-étape d'électrodéposition e210 jusqu'à ce que le dépôt de conducteur électrique sur la préforme du dissipateur thermique la rend étanche formant un préforme de conducteur S210' comme dans la troisième mise en œuvre, une étape de retrait e22 de la préforme de conducteur S210' de la solution.

Le procédé comporte en outre une étape d'ajustement e4 comprenant une sous-étape de changement de phase e40 de la phase solide à la phase liquide S40 mais contrairement à la troisième mise en œuvre, cette sous-étape est réalisée en dehors de la solution électrolytique. L'étape d'ajustement e4 comprend, comme dans la troisième mise en œuvre, une sous-étape d'évacuation e41 du volume du matériau à changement de phase par au moins une extrémité engendrée par les dilatations thermiques du matériau à changement de phase jusqu'à ce que le volume du matériau à changement de phase atteigne un volume prédéterminé dans la préforme conducteur ajustée S4.

Ensuite, le procédé de cette quatrième mise en œuvre comprend une étape d'enfermement E5 du matériau à changement de phase d'au moins l'extrémité ouverte pour l'étape d'ajustement E4. En l'occurrence dans cet exemple de cette mise en œuvre, l'étape d'enfermement E5 du matériau à changement phase comprend une sous-étape d'insertion de bouchon aux deux extrémités de la préforme conducteur S4. En particulier, selon cet exemple, chaque bouchon comprend la connectique nécessaire à l'alimentation de la bobine du bobinage.

Le procédé comprend ensuite la deuxième sous-étape d'insertion 205 de la préforme de conducteur S5 comprenant les bouchons et la sous-étape d'électrodéposition par électrolyse de la préforme de conducteur S5.

Sauf précision contraire, un même élément apparaissant sur des figures différentes présente une référence unique.

## Revendications

1. Procédé de fabrication d'un conducteur électrique à refroidissement par matériau à changement de phase, destiné à un enroulement d'un bobinage, **caractérisé en ce qu'**il comprend :
- une étape de fabrication (E1, E1') d'une préforme de dissipateur thermique (S1, S1') comprenant une première sous-étape de fabrication (e10) d'une préforme de matériau à changement de phase (s10),
- une étape de dépôt (E2, E2', E2") d'un élément conducteur par dépôt de couche de matériau conducteur électriquement sur la préforme dissipateur thermique comprenant :
∘une sous-étape d'insertion (e20, e20') de la préforme de dissipateur thermique dans une solution électrolytique du matériau conducteur électriquement,
∘une sous-étape d'électrodéposition (e21, e21', e210, e211, e215) pour le dépôt du matériau conducteur électriquement sur la préforme de dissipateur thermique (S1, S1').

2. Procédé de fabrication d'un conducteur d'un enroulement d'un bobinage selon la revendication précédente, dans lequel le matériau conducteur électriquement est du cuivre.

3. Procédé de fabrication d'un conducteur d'un enroulement d'un bobinage selon la revendication 1 ou 2, dans lequel étape de fabrication (E1, E1') de la préforme de dissipateur thermique forme une pluralité de portion ayant une section selon une première forme et une pluralité de deuxième portion selon une deuxième forme différente de la première forme et en ce que l'étape de dépôt (E2, E2', E2") du matériau conducteur sur la préforme forme un conducteur ayant des premières portions ayant chacune une section de forme différente d'une forme de section d'une pluralité de deuxièmes portions du conducteur.

4. Procédé de fabrication d'un conducteur d'un enroulement de bobinage selon l'une quelconque des revendications précédentes conducteur, comprend en outre :
- une étape d'ajustement (E4) du volume de matériau à changement de phase du dissipateur thermique comprenant :
∘une sous- étape de changement de phase (e40) de la phase solide à la phase liquide du matériau à changement de phase et
∘une sous-étape d'évacuation (e41) du volume du matériau à changement de phase par au moins une extrémité du dissipateur thermique engendrée par les dilatations thermiques du matériau à changement de phase,
- une étape d'enfermement (E5) du matériau à changement de phase du dissipateur thermique, et
- une étape d'isolation comprenant une sous-étape de dépôt par électrophorèse d'une couche d'isolant électrique de type AIN, Nanotubes de Bore, BN, Alumine sur le matériau conducteur.

5. Procédé de fabrication d'un conducteur d'un enroulement d'un bobinage selon l'une des revendications 1 à 3, comprenant une étape d'enfermement (E5) du matériau à changement de phase du dissipateur thermique comprenant une sous-étape d'insertion de bouchon à au moins une extrémité d'une préforme de conducteur.

6. Procédé de fabrication d'un conducteur d'un enroulement d'un bobinage selon la revendication précédente, dans lequel chaque bouchon comprend la connectique nécessaire à l'alimentation de la bobine du bobinage.

7. Procédé de fabrication d'un conducteur d'une bobine de bobinage selon la revendication 5 ou 6, dans lequel :
- l'étape de fabrication (E2") d'un élément conducteur par dépôt de couche de matériau conducteur électriquement sur la préforme dissipateur thermique comprend en outre :
o une sous-étape de retrait (e22) d'une préforme de conducteur (S210') de la solution électrolytique du matériau conducteur électriquement, la préforme de conducteur comprenant la préforme de dissipateur thermique (S1, S1') et une couche de matière conductrice d'électrodéposition par électrolyse sur la préforme de dissipateur thermique (S1, S1') formant une partie de l'élément conducteur et
∘une deuxième sous-étape d'insertion (e205) de la préforme de conducteur avec les bouchons dans la solution électrolytique du matériau conducteur électriquement,
∘une deuxième sous-étape électrodéposition par électrolyse (e215) pour le dépôt du matériau conducteur électriquement sur la préforme de conducteur et les bouchons,
- la sous-étape d'insertion de bouchon sur la préforme de conducteur (S210') est réalisée après cette sous-étape de retrait (e22) et avant la deuxième sous-étape d'insertion (e205),
- le procédé comprend en outre une étape d'isolation après l'étape de fabrication (E2") d'un élément conducteur par dépôt de couche de matériau conducteur, l'étape d'isolation comprenant une sous-étape de dépôt par électrophorèse d'une couche isolante de type AIN, Nanotubes de Bore, BN, Alumine sur la couche de matériau conducteur déposée sur la préforme.

8. Procédé de fabrication d'un conducteur d'un enroulement de bobinage selon l'une quelconque des revendications précédentes, dans lequel la préforme de dissipateur thermique est un câble.

9. Procédé de fabrication d'un conducteur d'un enroulement de bobinage selon l'une quelconque des revendications 1 à 7, dans lequel la préforme de dissipateur thermique est réalisée par un procédé additif afin d'avoir un conducteur à section irrégulière.

10. Procédé de fabrication d'un conducteur d'un enroulement de bobinage selon l'une quelconque des revendications précédentes, dans lequel l'étape de fabrication (E1) d'une préforme de dissipateur thermique comprend une sous-étape de métallisation (e11) par voie chimique par exemple dépôt chimique de cuivre ou d'argent sur le matériau à changement de phase.

## Patentansprüche

1. Verfahren zur Herstellung eines elektrischen Leiters mit Kühlung durch ein Phasenwechselmaterial, der für eine Wicklung einer Spule bestimmt ist, **dadurch gekennzeichnet, dass** es umfasst:
- einen Herstellungsschritt (E1, E1') einer Kühlkörper-Vorform (S1, S1'), der einen ersten Teilschritt (e10) zur Herstellung einer Vorform von Phasenwechselmaterial (s10) umfasst,
- einen Schritt (E2, E2', E2") zum Abscheiden eines leitenden Elements durch Aufbringen einer Schicht aus elektrisch leitendem Material auf die Kühlkörper-Vorform, umfassend:
o einen Teilschritt (e20, e20') zum Einbringen der Kühlkörper-Vorform in eine elektrolytische Lösung des elektrisch leitenden Materials,
o einen Teilschritt elektrischer Abscheidung (e21, e21', e210, e211, e215) zum Abscheiden des elektrisch leitenden Materials auf die Kühlkörper-Vorform (S1, S1').

2. Verfahren zur Herstellung eines Leiters einer Spulenwicklung nach dem vorstehenden Anspruch, bei dem das elektrisch leitende Material Kupfer ist.

3. Verfahren zur Herstellung eines Leiters einer Spulenwicklung nach Anspruch 1 oder 2, bei dem der Herstellungsschritt (E1, E1') der Kühlkörper-Vorform eine Vielzahl von Abschnitten mit einem Querschnitt in einer ersten Form und eine Vielzahl von zweiten Abschnitten in einer zweiten Form bildet, die sich von der ersten Form unterscheidet, und wobei der Abscheidungsschritt (E2, E2', E2") des leitfähigen Materials auf die Vorform einen Leiter bildet, der erste Abschnitte aufweist, von denen jeder einen Querschnitt hat, der sich von der Querschnittsform einer Vielzahl von zweiten Abschnitten des Leiters unterscheidet.

4. Verfahren zur Herstellung eines Leiters einer Spulenwicklung nach einem der vorstehenden Ansprüche, wobei der Leiter ferner umfasst:
- einen Schritt (E4) zum Anpassen des Volumens des Phasenwechselmaterials des Kühlkörpers, umfassend:
∘ einen Teilschritt (e40) des Phasenwechsels des Phasenwechselmaterials von der festen in die flüssige Phase und
∘ einen Teilschritt (e41) zum Abführen des Volumens des Phasenwechselmaterials durch mindestens ein Ende des Kühlkörpers, das durch die thermische Ausdehnung des Phasenwechselmaterials hervorgerufen wird,
- einen Schritt (E5) zum Einschließen des Phasenwechselmaterials des Kühlkörpers, und
- einen Isolierungsschritt, der einen Teilschritt des Aufbringens einer elektrisch isolierenden Schicht vom Typ AIN, Bornanoröhren, BN oder Aluminiumoxid auf das leitfähige Material mittels Elektrophorese umfasst.

5. Verfahren zur Herstellung eines Leiters einer Spulenwicklung nach einem der Ansprüche 1 bis 3, einen Schritt zum Einschließen (E5) des Phasenwechselmaterials des Kühlkörpers umfassend, der einen Teilschritt zum Einbringen eines Stopfens an mindestens einem Ende einer Leitervorform umfasst.

6. Verfahren zur Herstellung eines Leiters einer Spulenwicklung nach dem vorstehenden Anspruch, bei dem jeder Stopfen die für die Stromversorgung der Spulenwicklung erforderlichen Anschlüsse umfasst.

7. Verfahren zur Herstellung eines Leiters einer Spulenwicklung nach Anspruch 5 oder 6, bei der:
- der Herstellungsschritt (E2") eines Leiterelements durch Aufbringen einer Schicht aus elektrisch leitendem Material auf die Kühlkörper-Vorform ferner umfasst:
o einen Teilschritt (e22) zum Entnehmen einer Leiter-Vorform (S210') aus der elektrolytischen Lösung des elektrisch leitenden Materials, wobei die Leiter-Vorform die Kühlkörper-Vorform (S1, S1') und eine durch elektrolytische Abscheidung auf die Kühlkörper-Vorform (S1, S1') aufgebrachte Schicht aus elektrisch leitendem Material umfasst, die einen Teil des leitenden Elements bildet, und
o einen zweiten Teilschritt (e205) des Eintauchens der Leitervorform zusammen mit den Stopfen in die elektrolytische Lösung des elektrisch leitenden Materials,
o einen zweiten Teilschritt der elektrolytischen Abscheidung (e215) zum Abscheiden des elektrisch leitenden Materials auf die Leiter-Vorform und die Stopfen,
- wobei der Teilschritt des Einbringens von Stopfen auf die Leiter-Vorform (S210') nach diesem Entnahmeschritt (e22) und vor dem zweiten Einbring-Teilschritt (e205) durchgeführt wird,
- das Verfahren umfasst ferner einen Isolierungsschritt nach dem Herstellungsschritt (E2") eines leitenden Elements durch Aufbringen einer Schicht aus leitendem Material, wobei der Isolierungsschritt einen Teilschritt des Aufbringens einer Isolierschicht vom Typ AIN, Bornanoröhren, BN oder Aluminiumoxid auf die auf die Vorform aufgebrachte Schicht aus leitendem Material durch Elektrophorese umfasst.

8. Verfahren zur Herstellung eines Leiters einer Spulenwicklung nach einem der vorstehenden Ansprüche, bei dem die Vorform des Kühlkörpers ein Kabel ist.

9. Verfahren zur Herstellung eines Leiters einer Spulenwicklung nach einem der Ansprüche 1 bis 7, bei dem die Vorform des Kühlkörpers durch ein additives Verfahren hergestellt wird, um einen Leiter mit unregelmäßigem Querschnitt zu erhalten.

10. Verfahren zur Herstellung eines Leiters einer Spulenwicklung nach einem der vorstehenden Ansprüche, bei dem der Schritt (E1) zur Herstellung einer Kühlkörper-Vorform einen Teilschritt der chemischen Metallisierung (e11) umfasst, beispielsweise die chemische Abscheidung von Kupfer oder Silber auf das Phasenwechselmaterial.

## Claims

1. A method for manufacturing an electrical conductor cooled by a phase change material, intended for a winding of a coil, **characterized in that** it comprises:
- a step of manufacturing (E1, E1') a heat sink preform (S1, S1') comprising a first sub-step of manufacturing (e10) a phase change material preform (s10),
- a step of depositing (E2, E2', E2") a conductor element by depositing a layer of electrically conductive material onto the heat sink preform, the depositing step comprising:
o a sub-step of inserting (e20, e20') the heat sink preform into an electrolytic solution of the electrically conductive material,
∘ an electrodeposition sub-step (e21, e21', e210, e211, e215) for depositing the electrically conductive material onto the heat sink preform (S1, S1').

2. The method for manufacturing a conductor of a winding of a coil according to the preceding claim, wherein the electrically conductive material is copper.

3. The method for manufacturing a conductor of a winding of a coil according to claim 1 or 2, wherein the step of manufacturing (E1, E1') the heat sink preform forms a plurality of portions having a cross-section according to a first shape and a plurality of second portions according to a second shape different from the first shape and in that the step of depositing (E2, E2', E2") the conductive material onto the preform forms a conductor having first portions each having a cross-section of a a shape different from a cross-section shape of a plurality of second portions of the conductor.

4. The method for manufacturing a conductor of a winding of a coil according to any of the preceding claims, which further comprises:
- a step of adjusting (E4) the volume of the phase change material of the heat sink comprising:
o a sub-step of changing phase (e40) from the solid phase to the liquid phase of the phase change material and
o a sub-step of discharging (e41) the volume of the phase change material through at least one end of the heat sink generated by thermal expansions of the phase change material,
- a step of enclosing (E5) the phase change material of the heat sink, and
- an insulation step comprising a sub-step of deposition by electrophoresis of an electric insulator layer which is of type of AIN, Boron Nanotubes, BN or Alumina onto the conductive material.

5. The method for manufacturing a conductor of a winding of a coil according to any of claims 1 to 3, comprising a step of enclosing (E5) the phase change material of the heat sink comprising a substep of inserting a plug into at least one end of a conductor preform.

6. The method for manufacturing a conductor of a winding of a coil according to the preceding claim, wherein each plug comprises the connectics necessary to supply the coil of the winding.

7. The method for manufacturing a conductor of a coil of a winding according to claim 5 or 6, wherein:
- the step of manufacturing (E2") a conductor element by depositing a layer of electrically conductive material onto the heat sink preform further comprises:
o a sub-step of removing (e22) a conductor preform (S210') from the electrolytic solution of the electrically conductive material, the conductor preform comprising the heat sink preform (S1, S1') and a layer of conductive material **of electrodeposition by electrolysis** onto the heat sink preform (S1, S1') forming a part of the conductor element and
∘ a second sub-step of inserting (e205) the conductor preform with the plugs into the electrolytic solution of the electrically conductive material,
∘ a second sub-step of electrodeposition by electrolysis (e215) of depositing the electrically conductive material onto the conductor preform and the plugs,
- the sub-step of inserting a plug onto the conductor preform (S210') is performed after this removal sub-step (e22) and before the second insertion sub-step (e205),
- the method further comprises an insulation step after the step of manufacturing (E2") a conductor element by depositing a layer of conductive material, the insulation step comprising a sub-step deposition by electrophoresis of an insulating layer which is of type of AIN, Boron Nanotubes, BN or Alumina, onto the layer of conductive material deposited onto the preform.

8. The method for manufacturing a conductor of a winding of a coil according to any of the preceding claims, wherein the heat sink preform is a cable.

9. The method for manufacturing a conductor of a winding of a coil according to any of claims 1 to 7, wherein the heat sink preform is made by an additive method in order to have a conductor with an irregular cross-section.

10. The method for manufacturing a conductor of a winding of a coil according to any of the preceding claims, wherein the step of manufacturing (E1) a heat sink preform comprises a chemical metallisation sub-step (e11) for example chemical deposition of copper or silver onto the phase change material.
